# EUROPEAN PATENT SPECIFICATION

(11) **EP 3 798 192 B1**
(45) Date of publication and mention of the grant of the patent: **19.11.2025**
(21) Application number: 19199693.3
(22) Date of filing: 25.09.2019
(51) Int. Cl.: C02F 1/68, A23L 2/54, C02F 1/00, C02F 1/28, C02F 1/42

(54) **DEVICE AND METHOD FOR PURIFYING, ENHANCING AND/OR CARBONATING AN AQUEOUS LIQUID**
VORRICHTUNG UND VERFAHREN ZUR REINIGUNG, VERSTÄRKUNG UND/ODER CARBONYLIERUNG EINER WÄSSRIGEN FLÜSSIGKEIT
DISPOSITIF ET PROCÉDÉ DE PURIFICATION, D'AMÉLIORATION ET/OU DE CARBONATATION D'UN LIQUIDE AQUEUX

(43) Date of publication of application: 31.03.2021
(73) Proprietor: mittemitte GmbH, 12059 Berlin (DE)
(72) Inventor: BATIMAN, Faebian, 10115 Berlin (DE); WAGEMANS, Wiebe, 10119 Berlin (DE)
(74) Representative: Schulz Junghans Patentanwälte PartGmbB

(56) References cited:
- EP-A1- 3 209 169
- EP-A1- 3 983 344
- EP-B1- 3 209 169
- DE-A1- 102011 001 252
- JP-A- H05 212 388
- KR-B1- 101 875 128
- US-B2- 9 687 796

## Description

The invention relates to a device and a method for purifying, enhancing, particularly mineralizing, and/or carbonating an aqueous liquid, particularly a beverage, more particularly drinking water.

Devices for carbonating aqueous liquids by adding CO₂ gas are known from the prior art (e.g. US4518541A). It is also known to purify drinking water by filtering particles and adsorption of substances in the water or by distillation. Purified water often lacks essential components of drinking water such as mineral salts, which can be added to enhance the drinking water (US 2017/0000164 A1). Other devices for carbonating and enhancing/purifying water are known in DE 10 2011 001252 A1, JP H05 212388 A, KR 101 875 128 B1, EP 3 209 169 A1 and US 9 687 796 B2.

Therefore, the objective underlying the invention is to improve these devices and methods to be able to obtain an aqueous liquid, which is purified, enhanced by addition of healthy substances, and/or carbonated, particularly in a single process and by a single device.

This objective is attained by the subject matter of the independent claims. Favorable embodiments are claimed in the sub claims and described hereafter.

A first aspect of the invention relates to a device for purifying, enhancing and/or carbonating an aqueous liquid, particularly a beverage, more particularly drinking water, as defined in claim 1.

By pressurizing the first liquid reservoir, a gas of choice may be added to the aqueous liquid contained in the first liquid reservoir. In addition, the pressure of the first liquid reservoir may be used to move the aqueous liquid through the medium for purifying and/or enhancing the aqueous liquid. Any gas or gas mixture may be used to this end, e.g. CO₂, pressurized air or nitrogen.

In the context of the present specification, the term 'pressurized gas' means a gas having a pressure of at least 110kPa (1.1 bar), particularly at least 300 kPa (3 bar), more particularly at least 1000 kPa (10 bar), even more particularly at least 3000 kPa (30 bar), even more particularly at least 5000 kPa (50 bar), above ambient pressure.

In certain embodiments, the device comprises the first liquid reservoir.

In certain embodiments, the device comprises the second liquid reservoir.

The device comprises a gas line connecting the gas reservoir with the first liquid reservoir, such that the gas reservoir may be brought in flow connection with the first liquid reservoir by the gas line to pressurize the first liquid reservoir. In certain embodiments, the device comprises a gas line valve for opening and/or closing the gas line.

In certain embodiments, the device comprises a first fluid line connecting the first liquid reservoir with the medium, wherein particularly the device comprises a first fluid valve for opening and/or closing the first fluid line.

In certain embodiments, the device comprises a second fluid line connecting the medium with the second liquid reservoir, wherein according to the invention the device comprises a second fluid valve for opening and/or closing the second fluid line.

In certain embodiments, the first liquid reservoir is connected to the environment via a (first) pressure equalizing valve, particularly wherein the (first) pressure equalizing valve is configured to open and/or close a pressure equalization line, the pressure equalization line more particularly branching off from the gas line downstream of the gas valve (i.e. between the gas valve and the first liquid reservoir).

In certain embodiments, the second liquid reservoir is connected to the environment via a (second) pressure equalizing valve, particularly wherein the (second) pressure equalizing valve is configured to open and/or close a pressure equalization line, the pressure equalization line more particularly branching off from the second fluid line.

In certain embodiments, the device comprises a return line directly connecting the second liquid reservoir with the first liquid reservoir (that is without passing through the medium), wherein particularly the device comprises a return line valve for opening and/or closing the return line.

In certain embodiments, the first liquid reservoir is connected to the environment via a safety valve which opens at a specified pressure to protect the device from overpressure and/or which regulates the pressure in the first liquid reservoir.

According to the invention, the device comprises a further gas line connecting the gas reservoir with the second liquid reservoir, wherein particularly the device comprises a (further) gas valve for opening and/or closing the further gas line.

The term 'aqueous liquid' within the meaning of the present specification relates to a substance which is a liquid at a temperature of 20° C and atmospheric pressure 100 kPa (1,0 bar) and contains at least 10 %, particularly at least 20 %, more particularly at least 50 % H₂O. Of course, the aqueous liquid may further contain gases, in other words may be a gas-liquid mixture.

In certain embodiments, the aqueous liquid is a beverage, wherein particularly the aqueous liquid is drinking water.

A 'beverage' in the meaning of the present specification is an aqueous liquid that is suitable for consumption by humans. The term 'drinking water' as used herein refers to water that is considered safe for human consumption, particularly tap water or bottled water.

In the context of the present specification, the term 'medium' designates a solid or a liquid or a mix of solids and/or liquids configured to remove substances from the aqueous liquid and/or add substances from the aqueous liquid when the aqueous liquid is brought in contact with the medium.

Removing substances from the aqueous liquid is also termed 'purifying' in the context of the present specification, regardless of whether the aqueous liquid is completely purified by removing essentially all substances (i.e. resulting in demineralized water) or only partially (meaning that only a part of the substances is removed or only substances of a certain type are removed from the aqueous liquid).

In order to remove substances, the medium may comprise a filter or may be configured as a filter. Therein, the term 'filter' refers to a medium configured to remove substances based on their size. For instance, the medium may comprise a membrane or thin film having pores of a defined size, such that only particles or substances smaller than the pores may pass the membrane and larger particles or substances are retained by the filter. The corresponding purification process is referred to as 'filtering' herein.

Alternatively or additionally to a filter, the medium may comprise a matrix configured to remove substances from the aqueous liquid by adsorption. The term 'adsorption' as used herein means accumulation of components of a liquid or a gas on the surface of a solid. E.g. a matrix capable of adsorbing substances from the aqueous liquid is activated carbon (which may also be termed active charcoal). The activated carbon may be provided in the medium as a solid block having the benefit of simultaneously acting as a filter, or as a granulate, resulting in an increased interaction surface between the aqueous liquid and the medium and therefore improved purification.

Furthermore, as an alternative to the filter or the matrix (e.g. activated carbon) or in combination with a filter, in combination with a matrix (e.g. activated carbon), or in combination with both a filter and a matrix (e.g. activated carbon), the medium may comprise an ion exchange material. An ion exchange material within the meaning of the present specification is a material configured to bind ions (anions, e.g. chloride, or cations) thereby removing ions from the aqueous liquid or exchanging certain ions for less harmful or even desirable ions (combined purification and enhancement).

Especially for drinking water, it is highly desirable to remove substances such as salts and chemicals that are harmful and/or that negatively influence the taste/drinking experience, such as chloride.

For adding substances to the aqueous liquid, which throughout this specification is also termed 'enhancing' the aqueous liquid, the medium may comprise a reservoir comprising one or several substances of choice, such as mineral salts (e.g. calcium carbonate or magnesium carbonate) and/or oils. For example, in case of mineral salts the reservoir may comprise a concentrated solution or a suspension of the mineral salt (or mineral salts) or matrix comprising solid salt crystals which are dissolved upon passing the aqueous liquid through the medium. Oils may be provided e.g. as a nano emulsion and/or combined with emulsifiers and/or surfactants, so that they can be mixed with the aqueous solution.

Adding components to an aqueous liquid such as drinking water is advantageous, since purified water often lacks essential mineral salts. Using the medium according to the invention, healthy substances can be added to an aqueous liquid in a controlled manner, thereby enhancing the aqueous liquid. In addition or alternatively, the flavor of the aqueous liquid may be enhanced. Healthy substances that can be added to the aqueous liquid may be selected from dietary minerals, proteins, vitamins, probiotic and herbal additives. A dietary mineral is a chemical element required as an essential nutrient by organisms to perform functions necessary for life. Typically, said chemical elements are comprised within said medium in a chemically bound manner, in particular as salts. A compound is a chemical substance or mixture of chemical substances. In one embodiment, at least one dietary mineral comprised in said solid and/or liquid does not comprise calcium and does not comprise magnesium.

Probiotics are microorganisms that are believed to provide health benefits when consumed. Herbs in the context of the invention are any plants or parts or products thereof used for food, flavoring, medicine, or fragrances for their savory or aromatic properties or for mitigating, treating, or curing a disease. Plant extracts and botanical drugs are comprised. For example, ginseng, green tea or matcha may be used. This embodiment of the invention adds additional health benefits.

According to the invention, the device comprises the medium for enhancing and optionally purifying an aqueous liquid.

In certain embodiments, the device comprises at least one first medium, particularly for removing components from, in other words purifying, the aqueous liquid, and at least one second medium, particularly for adding components to, in other words enhancing, the aqueous liquid.

In certain embodiments, the device comprises a pump configured to move the aqueous liquid from the first liquid reservoir through the medium into the second liquid reservoir.

In certain embodiments, the device is configured to move the aqueous liquid from the first liquid reservoir through the medium into the second liquid reservoir driven by a pressure difference between the first liquid reservoir and the second liquid reservoir when the first liquid reservoir is pressurized.

By using the pressure difference between the first liquid reservoir and the second liquid reservoir obtained by adding the gas to the first liquid reservoir, this embodiment advantageously allows to transport the aqueous liquid through the medium without an external source of energy (such as a power source connected to a pump). In addition, by using the pressure of the gas from the gas reservoir instead of pumps, it is possible to create higher pressures at lower costs and less (electro)-mechanical part that increase the risk of failure.

In certain embodiments, the first liquid reservoir extends along a longitudinal axis and comprises a bottom wall, wherein the bottom wall forms a bottom of the first liquid reservoir when the first liquid reservoir is positioned such that the longitudinal axis extends vertically, wherein the device comprises a first fluid line connecting the first liquid reservoir to the medium, wherein the first fluid line comprises an inlet which is positioned in the first liquid reservoir adjacent the bottom wall. In particular, the bottom wall extends perpendicular to the longitudinal axis.

In certain embodiments, the first liquid reservoir has a height parallel to the longitudinal axis, wherein a distance between the inlet and the bottom wall along the longitudinal axis is less than one fifth of the height, particularly less than one tenth of the height.

Thereby, the aqueous liquid can be almost completely removed from the first liquid reservoir and moved through the medium.

In certain embodiments, the device comprises a pressure equalizing valve connecting the first liquid reservoir to the environment of the device, such that the aqueous liquid flows back from the second liquid reservoir to the first liquid reservoir driven by a pressure difference between the second liquid reservoir and the first liquid reservoir when the second liquid reservoir is closed from the environment, such that the aqueous liquid flowing into the second liquid reservoir builds up pressure in the second liquid reservoir, and when the pressure in the first liquid reservoir is reduced by releasing gas to the environment by means of the pressure equalizing valve. In particular, the aqueous liquid flows back from the second liquid reservoir to the first liquid reservoir via the medium.

Since the aqueous liquid is moved back from the second liquid reservoir to the first liquid reservoir, the user may advantageously handle and use the same reservoir (which may particularly be a bottle) for filling in the aqueous liquid and removing the aqueous liquid from the device. The second reservoir may then be a tank "hidden" in the device which is not seen or operated by the user. This improves ease of use of the device. Using the pressure difference between the reservoirs for moving the aqueous liquid back advantageously obviates the need for a separate (e.g. electrical) energy source. Furthermore, two passes between the first and the second liquid reservoir allow to contact the medium for purifying or enhancing the aqueous liquid twice. Therefore, a smaller volume of the medium is needed to achieve the same effect compared to a single pass of the aqueous liquid.

In certain embodiments, the device comprises a return line connecting the second liquid reservoir to the first liquid reservoir, such that the aqueous liquid flows back from the second liquid reservoir to the first liquid reservoir via the return line when the pressure in the first liquid reservoir is reduced by releasing gas to the environment by means of the pressure equalizing valve.

In certain embodiments, the device comprises a return line valve for opening and/or closing the return line.

In certain embodiments, the return line valve is a three-way valve between the medium, the second liquid reservoir and the return line.

Such a return line ensures that the aqueous liquid is passed through the medium only once. This may be of advantage e.g. in case of mechanical filtering to make sure that particles retained on the filter are not washed back into the aqueous liquid during passing the aqueous liquid back to the first liquid reservoir. In addition, in case of enhancement (adding components), the amount of added components can be more accurately controlled during one pass through the medium. Furthermore, when a combination of purification and enhancement is applied (some components are removed and others added to the aqueous liquid), components added during the first pass through the medium may be inadvertently removed during the second pass.

In certain embodiments, the second liquid reservoir comprises an opening in flow connection with the medium, wherein the second liquid reservoir extends along a longitudinal axis and comprises a bottom wall, particularly extending perpendicular to the longitudinal axis, wherein the bottom wall forms a bottom of the second liquid reservoir when the second liquid reservoir is positioned such that the longitudinal axis extends vertically, wherein the opening is arranged in the bottom wall.

The described opening serves as the outlet during passing the aqueous liquid back to the first liquid reservoir. Arranging this opening at the bottom of the second liquid reservoir allows to remove the aqueous liquid from the second liquid reservoir completely or almost completely.

In certain embodiments, the device comprises at least one volume for containing the medium, wherein the at least one fluid line connects the first liquid reservoir with the at least one volume and connects the at least one volume with the second liquid reservoir. In particular, the first fluid line connects the first liquid reservoir with the at least one volume, and the second fluid line connects the at least one volume with the second liquid reservoir.

In certain embodiments, the volume is comprised in a removable cartridge or bottle.

In certain embodiments, the first medium and the second medium are contained in the volume. Therein, the first medium and the second medium may be mixed in the volume, or the first medium and the second medium may be disposed separately in the volume, that is in one or several sub-compartments of the volume.

In certain embodiments, the device comprises a first volume for containing a medium for purifying and/or enhancing the aqueous liquid, and a second volume for containing a medium for purifying and/or enhancing the aqueous liquid, particularly wherein the first volume contains the first medium for purifying the aqueous liquid, and the second volume contains the second medium, particularly for enhancing the aqueous liquid.

In certain embodiments, the first volume and the second volume are comprised in a (single) removable cartridge.

In certain embodiments, the first fluid line comprises an outlet in fluid connection with the first volume, and the second fluid line comprises an inlet in fluid connection with the second volume, wherein particularly a first medium for removing components from the aqueous liquid is contained in the first volume and a second medium for adding components to the aqueous liquid is contained in the second volume. In this manner, the aqueous liquid is first purified by the first medium and subsequently enhanced by the second medium. Thereby, it is ensured that no components added during the enhancement are inadvertently removed during the purification.

In certain embodiments, the first fluid line is connected to the first volume via a first check valve allowing flow in the direction from the first liquid reservoir towards the first volume, and the first fluid line is connected to the second volume via a second check valve allowing flow in the direction from the second volume towards the first liquid reservoir.

A check valve (or one-way valve) as used herein is a valve which allows flow in a first direction and blocks flow in a second direction opposite to the first direction.

By means of the first and second check valve, the aqueous liquid may be moved subsequently from the first liquid reservoir through the first fluid line and the first check valve into the first volume containing the first medium, from the first volume to the second volume containing the second medium, through the second fluid line into the second liquid reservoir and back from the second liquid reservoir through the second fluid line into the second volume containing the second medium (two passes through the second medium), through the second check valve back into the first fluid line, and back into the first liquid reservoir (only one pass through the first medium).

This advantageously allows a single pass of the aqueous liquid through the first medium (particularly for purification) and two passes through the second medium (particularly for enhancement) without a separate return line, reducing complexity of the device while improving efficiency of liquid enhancement.

In certain embodiments, the first volume is comprised in a first removable cartridge and the second volume is comprised in a second removable cartridge in flow connection with the first removable cartridge, particularly wherein the first volume contains a first medium for removing components from the aqueous liquid and the second volume contains a second medium for adding components to the aqueous liquid.

In certain embodiments, the first cartridge is configured for multiple uses (that is multiple passes through and the second cartridge is configured for a single use (that is a single pass of the aqueous liquid through the cartridge or a first and a second pass through the cartridge in case the aqueous liquid is moved back from the second liquid reservoir to the first liquid reservoir). A single use cartridge can then be replaced by a fresh cartridge after use. This is particularly interesting for enhancements that rely on materials that are highly soluble and don't last multiple uses, and/or that cannot be stored longer once wet, and/or that have an internal structure or composition that only works once when passing water through it.

In certain embodiments, the device and/or the at least one fluid line is configured to be connected to a removable cartridge or bottle, wherein the cartridge contains the medium. Such a removable cartridge can be replaced as a whole, and does not have to be opened for maintenance, which improves cleanliness of the interior of the container and avoids accidental contamination.

In certain embodiments, the device comprises the removable cartridge or bottle. In certain embodiments, the cartridge or bottle comprises the volume for containing the medium.

A removable cartridge or bottle has the advantage that the user may select the medium according to the specific needs of purifying and/or enhancement of the aqueous liquid.

In certain embodiments, the cartridge comprises a means of identification.

A means of identification in the context of the invention is any readable means, in particular an electrically, electronically and/or optically readable tag, which allows for the carrying of information, e.g. concerning the identity of the cartridge. It is particularly machine-readable in a contactless way. Reading of said means of identification and/or transmission of said property may be realizable or realized by means of modulated electromagnetic radiation, magnetism, e.g. using magnetic strips, and/or induction, in particular using radio-frequency identification technology. It may alternatively comprise an optically readable code such as a barcode, QR code or the like. The means of identification is particularly arranged on or in the cartridge. It may for example be stuck to the outside of the cartridge in the manner of a sticker. In particular, it is positioned in a way enabling a reading process when the cartridge is in a suitable position.

A property comprises at least one piece of information that has been stored on said means of identification. Storing may also be referred to as writing or saving. For example, said property is or comprises a unique identification code which is suitable for identification of the type of the cartridge and/or the individual cartridge. In one embodiment, said property is firmly stored on said means of identification, i.e. it is not amendable.

Reading an identification means extracting a property from said means of identification in an automated or automatable way. In particular, said means of identification can be read by a suitable identification reader, for example a radio-frequency identification reader.

In certain embodiments, the means of identification is machine-readable in a contactless manner by an identification reader of the device.

In certain embodiments, the means of identification is a radio frequency identification chip (RFID chip).

In certain embodiments, the means of identification is usable for tracking the lifetime of the cartridge.

In certain embodiments, the means of identification is usable for identifying a type of the cartridge and/or an individual cartridge.

In certain embodiments, the means of identification is configured for receiving and storing information.

Storing of said information may be realized by storing this information in addition to the information already stored on said means of identification. It may also be realized by amending and/or overwriting information already stored on said means of identification.

Receiving does not necessarily mean a wireless receiving. The latter may be realized e.g. by a wireless receiving device being in data connection with said means of identification at least for the process of transfer of information. In this case, the means of identification is configured for receiving said information from a wireless receiving device. A radio-frequency identification tag is suitable for both receiving and storing information in a contactless way. This information may comprise or be said property.

For example, a date and/or time of installation, usage and/or removal of said cartridge may be storable on said means of identification. Additionally and/or alternatively, information on the volume passed through the cartridge can be storable by said means of identification. In particular, said receiving and storing of information is to be realized in an electrical or electronic contactless way.

This embodiment leads to the advantage that said means of identification means is usable in a versatile way in order to read and write information.

In certain embodiments, the second liquid reservoir is at least partially transparent. In this manner, at least a part of the process performed by the device is visible to the user. This entertains the user during the process and makes the process feel shorter to the user.

In certain embodiments, the device comprises the medium.

In certain embodiments, the medium is configured to add at least one substance to the aqueous liquid when the aqueous liquid is brought in contact with the medium, particularly flows through the medium, particularly thereby enhancing the aqueous liquid, wherein particularly the device comprises the medium.

In certain embodiments, the medium is configured to add at least one substance to the aqueous liquid by dissolution of the substance in the aqueous liquid when the aqueous liquid is brought in contact with the medium, particularly flows through the medium.

In certain embodiments, the medium comprises at least one mineral salt, particularly calcium carbonate or magnesium carbonate.

In certain embodiments, the medium comprises at least one oil, particularly cannabidiol.

In certain embodiments, the gas reservoir contains CO₂ gas, such that an aqueous liquid contained in the first liquid reservoir is carbonated when the first liquid reservoir is pressurized, wherein particularly the medium comprises at least one mineral salt, the solubility of which is increased in the presence of CO₂, carbonic acid, carbonate ions, hydrogen carbonate ions or an acidic pH. In particular, the device comprises the gas reservoir.

Dissolved CO₂ in the aqueous liquid increases the solubility of minerals in the aqueous liquid and, thus, the dissolution of carbonate and/or bicarbonate ions into the aqueous liquid. Dissolving CO₂ into water leads to a shift in the chemical equilibrium of CO₂ and carbonic acid and, thus, to a better solubility of minerals. In particular, the pH value of the aqueous liquid decreases through the dissolution of CO₂.

In certain embodiments, the medium is configured to remove at least one substance from the aqueous liquid, thereby purifying the aqueous liquid, wherein particularly the device comprises the medium.

In certain embodiments, the medium comprises activated carbon, an ion exchange material and/or a filter.

In certain embodiments, the device comprises a control device, wherein the control device is configured to control the pressure equalizing valve and/or at least one valve to open and/or close a gas line connecting the gas reservoir with the first liquid reservoir, the at least one fluid line and/or the return line.

In certain embodiments, the control device is configured to close the first fluid valve and/or close the (first) pressure equalizing valve and configured to open the gas valve, such that gas flows from the gas reservoir into the first liquid reservoir thereby pressurizing the first liquid reservoir, particularly upon a command by a user (e.g. by pressing a button or activating a command in an application of a wireless device connected to the control device).

In certain embodiments, the device comprises a pressure sensor configured to determine a pressure in the first liquid reservoir, wherein the pressure sensor is connected to the control device, such that a determined pressure value may be transferred to the control device.

In certain embodiments, the control device is configured to close the gas valve automatically upon receiving a specified pressure value, such that pressurization of the first liquid reservoir is stopped.

In certain embodiments, the control device is configured to open the first fluid valve and/or the second fluid valve when the first liquid reservoir is pressurized, such that the aqueous liquid flows from the first liquid reservoir through the at least one medium to the second liquid reservoir, particularly upon a command by a user.

In certain embodiments, the control device is configured to actuate the pump, such that the aqueous liquid flows from the first liquid reservoir through the at least one medium to the second liquid reservoir, particularly upon a command by a user.

In certain embodiments, the control device is configured to open the first pressure equalizing valve and the first fluid valve and/or the second fluid valve when the second liquid reservoir is pressurized, such that the aqueous liquid flows from the second liquid reservoir back to the first liquid reservoir.

In certain embodiments, the control device is configured to open the first pressure equalizing valve and the return line valve when the second liquid reservoir is pressurized, such that the aqueous liquid flows from the second liquid reservoir back to the first liquid reservoir.

In certain embodiments, the device comprises at least one sensor configured to determine a physical parameter of the aqueous liquid, particularly a temperature, a conductivity, or a pressure. In particular, the temperature of the aqueous liquid influences the CO₂ dissolution. In particular, the conductivity changes when minerals are dissolved in the aqueous liquid. In particular, the pressure of the aqueous liquid indicates the amount of gas added to the aqueous liquid.

In certain embodiments, the device is configured to transmit measured values of the physical parameter from the at least one sensor to the control device, wherein the control device is configured to control the pressure equalizing valve and/or at least one valve to open and/or close a gas line connecting the gas reservoir with the first liquid reservoir, the at least one fluid line and/or the return line according to the transmitted measured values.

In certain embodiment, the control device is configured to adjust a timing between steps of the method according to the invention based on the measured values received from the at least one sensor and/or based on an identification of the cartridge and/or gas reservoir through the at least one means of identification. In particular, the control device is configured to adjust the time between pressurizing the aqueous liquid in the first liquid reservoir and opening the first fluid valve depending on a temperature measured by a temperature sensor and transmitted to the control device. In this manner, in particular, the time before opening the first fluid valve after pressurizing can be increased if a higher temperature of the water is measured in order to dissolve more CO₂ in the aqueous liquid (which is slower at higher temperatures).

In certain embodiments, the control device is configured to control the method according to the invention based on an identification of the cartridge and/or gas reservoir through the at least one means of identification, wherein particularly the control device is configured to adjust the time the aqueous liquid spends in the medium or cartridge, configured to determine whether or not to open the return line, configured to adjust the pressure in the device, particularly in the first liquid reservoir, or configured to inject gas into the first and/or second liquid reservoir multiple times.

A second aspect of the invention relates to a system comprising the device according to the first aspect, wherein the system further comprises the first liquid reservoir and/or the second liquid reservoir and/or the gas reservoir and/or the medium, particularly the medium being comprised in a removable cartridge.

A third aspect of the invention relates to a method for purifying, enhancing and/or carbonating an aqueous liquid, particularly using the device according to the first aspect, as defined in claim 11, wherein the aqueous liquid is provided in a first liquid reservoir, the first liquid reservoir is pressurized, the aqueous liquid is passed or moved from the first liquid reservoir through a medium for purifying and/or enhancing the aqueous liquid to a second liquid reservoir.

In certain embodiments of the method, the aqueous liquid is passed or moved from the first liquid reservoir through the medium to the second liquid reservoir driven by a pump.

In certain embodiments of the method, the aqueous liquid is passed or moved from the first liquid reservoir through the medium to the second liquid reservoir driven by a pressure difference between the first liquid reservoir and the second liquid reservoir.

In certain embodiments, at least one substance is added to the aqueous liquid by the medium when the aqueous liquid is brought in contact with the medium, particularly flows through the medium, particularly thereby enhancing the aqueous liquid.

In certain embodiments, the at least one substance is added to the aqueous liquid by dissolution of the substance in the aqueous liquid.

In certain embodiments, the medium comprises at least one mineral salt that is dissolvable in the aqueous liquid, particularly wherein the mineral salt is calcium carbonate or magnesium carbonate.

In certain embodiments, the medium comprises at least one oil which is at least partially miscible with the aqueous liquid, particularly wherein the oil is cannabidiol. In particular, the oil is comprised in or provided as a nano emulsion. Alternatively, in particular, the oil and/or the aqueous liquid comprises at least one emulsifier and/or at least one surfactant.

In certain embodiments, at least one substance is removed from the aqueous liquid by the medium, thereby purifying the aqueous liquid, wherein particularly the aqueous liquid is filtered or components of the aqueous liquid are adsorbed to the medium.

In certain embodiments, the first liquid reservoir is pressurized by injecting CO₂ gas into the first liquid reservoir, such that the aqueous liquid contained in the first liquid reservoir is carbonated.

In certain embodiments, the solubility of least one mineral salt comprised in the medium is increased by CO₂, carbonic acid, carbonate ions and/or hydrogen carbonate ions in the carbonated aqueous liquid and/or by an acidic pH of the carbonated aqueous liquid.

In certain embodiments, the amount of CO₂ injected into the first liquid reservoir is controlled such that a still aqueous liquid is obtained.

A 'still aqueous liquid' according to the present specification is an aqueous liquid having a CO₂ gas concentration of less than 1 g/l, particularly less than 0.5 g/l, more particularly less than 0.25 g/l.

In particular, the CO₂ gas concentration of the aqueous liquid can be determined by a thermal conductivity measurement of the aqueous liquid or by other methods known in the art of analytical chemistry, physical chemistry or food chemistry.

In certain embodiments, the contact time with the mineral salts in the medium is controlled such that a still aqueous liquid is obtained.

In other words, the amount of CO₂ injected and/or the contact time with the minerals reacting with the CO₂ is controlled such that most of the CO₂ is used up in the reaction with the minerals, resulting in a still aqueous liquid. This method advantageously allows to produce enhanced still water with a controlled amount of dissolved minerals the solubility of which is increased by CO₂.

In certain embodiments, the amount of CO₂ injected into the first liquid reservoir is controlled such that a carbonated aqueous liquid is obtained.

A 'carbonated aqueous liquid' according to the present specification is an aqueous liquid having a CO₂ gas concentration of 1 g/l or more, particularly 2.5 g/l or more.

In certain embodiments, the contact time with the mineral salts in the medium is controlled such that a carbonated aqueous liquid is obtained.

In other words, the amount of CO₂ injected and/or the contact time with the minerals reacting with the CO₂ is controlled such that enough CO₂ remains after the reaction with the minerals, such that a carbonated aqueous liquid is produced.

In certain embodiments, after passing or moving the aqueous liquid through the medium, further CO₂ gas is added to the aqueous liquid resulting in a carbonated aqueous liquid. In this manner, if desired, a carbonated aqueous liquid can be obtained even under conditions where most of the CO₂ is used up during the reaction with the mineral salts. In particular, the further CO₂ gas is added to the aqueous liquid in the first liquid reservoir (e.g. by opening the gas line from the gas reservoir a second time), or the further CO₂ gas is added to the aqueous liquid in the second liquid reservoir (i.e. through an additional gas line).

In certain embodiments, the medium is replaced between filling and emptying the first liquid reservoir.

In certain embodiments, the aqueous liquid is passed or moved from the first liquid reservoir through a first medium for purifying the aqueous liquid and a second medium for enhancing the aqueous liquid to a second liquid reservoir. In particular, the first medium is provided in a first volume and the second medium is provided in a second volume, wherein particularly the first volume is comprised in a first cartridge and the second volume is comprised in a second cartridge.

In certain embodiments, at least one component is removed from the aqueous liquid by the first medium (thereby purifying the aqueous liquid), and at least one component is added to the aqueous liquid by the second medium (thereby enhancing the aqueous liquid), wherein particularly the first cartridge is configured for multiple uses (that is multiple passes through and the second cartridge is configured for a single use (that is a single pass of the aqueous liquid through the cartridge or a first and a second pass through the cartridge in case the aqueous liquid is moved back from the second liquid reservoir to the first liquid reservoir). A single use cartridge can then be replaced by a fresh cartridge after use. This is particularly interesting for enhancements that rely on materials that are highly soluble and don't last multiple uses, and/or that cannot be stored longer once wet, and/or that have an internal structure or composition that only works once when passing water through it.

A fourth aspect of a non-claimed disclosure relates to a removable cartridge for use with a device according to the first aspect of the invention, wherein the cartridge comprises at least one medium for purifying and/or enhancing an aqueous liquid.

In certain embodiments, the medium is configured to remove at least one substance from the aqueous liquid.

In certain embodiments, the medium is configured to add at least one substance to the aqueous liquid.

In certain embodiments, the cartridge comprises at least one volume for containing the medium.

In certain embodiments, the cartridge is configured to be connected to the at least one fluid line, particularly the first and the second fluid line, of the device, particularly between the first liquid reservoir and the second liquid reservoir, such that the aqueous liquid can be moved or passed from the first liquid reservoir through the medium in the cartridge to the second liquid reservoir.

In certain embodiments, the cartridge comprises a first port for connecting the first fluid line and/or a second port for connecting the second fluid line.

In certain embodiments, the device comprises a first volume containing a first medium for purifying and/or enhancing the aqueous liquid, and a second volume containing a second medium for purifying and/or enhancing the aqueous liquid.

In certain embodiments, the first port is in fluid connection with the first volume, and the second port is in fluid connection with the second volume.

In certain embodiments, a first medium for removing components from the aqueous liquid is contained in the first volume and a second medium for adding components to the aqueous liquid is contained in the second volume.

In certain embodiments, the first port is connected to the first volume via a first check valve allowing flow in the direction from the first liquid reservoir towards the first volume, and the second port is connected to the second volume via a second check valve allowing flow in the direction from the second volume towards the first liquid reservoir.

A check valve as used herein is a valve which allows flow in a first direction and blocks flow in a second direction opposite to the first direction.

Wherever alternatives for single separable features are laid out herein as "embodiments", it is to be understood that such alternatives may be combined freely to form discrete embodiments of the invention disclosed herein.

### Description of the Figures

Exemplary embodiments of the invention are now described with reference to the Figures which are meant to elucidate the invention, but not to limit its scope.
- Fig. 1: shows a device not according to the claimed invention;
- Fig. 2: shows a further variation of the device not according to the claimed invention comprising a cartridge that encases the medium and the second liquid reservoir;
- Fig. 3: shows a further variation of the device not according to the claimed invention comprising a return line;
- Fig. 4: shows a further variation of the device not according to the claimed invention comprising a return line and a three-way valve;
- Fig. 5: shows a further variation of the device not according to the claimed invention comprising a return line combined with check valves;
- Fig. 6: shows a further variation of the device not according to the claimed invention;
- Fig. 7: shows a further variation of the device not according to the claimed invention comprising a pump;
- Fig. 8: shows an embodiment of the device according to the invention comprising gas lines to the first and second liquid reservoir;
- Fig. 9A-B: show steps of the method not according to the invention;
- Fig. 10A-C: show embodiments of a cartridge according to the invention.

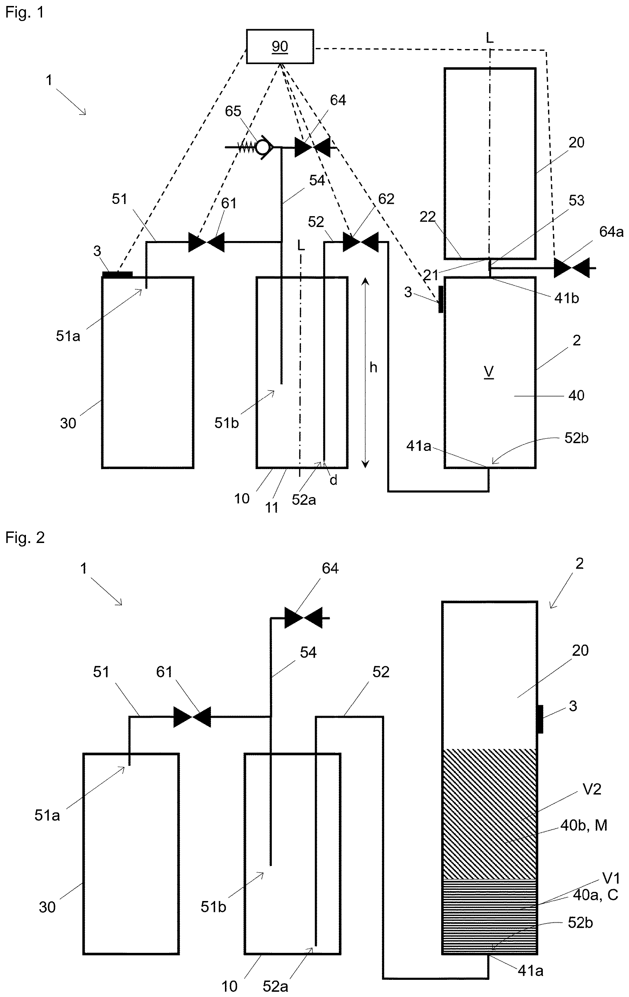

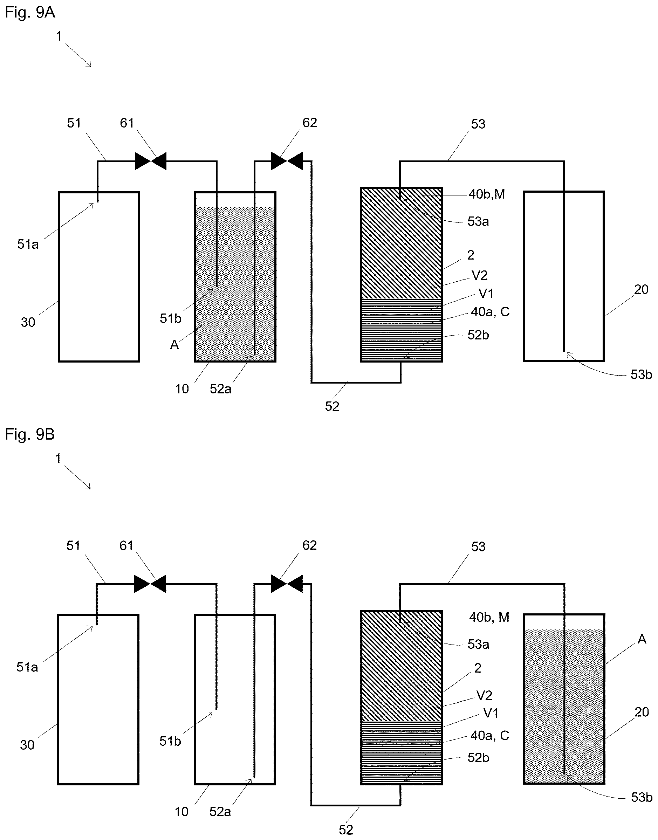

Fig. 1 shows a device 1 comprising a first liquid reservoir 10 for receiving an aqueous liquid A (see Fig. 9A-B), a second liquid reservoir 20, a gas reservoir 30, and a medium 40 for purifying and/or enhancing the aqueous liquid A. The first liquid reservoir 10 be a removable bottle and the second liquid reservoir 20 may e.g. be a further bottle or a tank.

The gas reservoir 30 is connected to the first liquid reservoir 10 by a gas line 51 comprising an inlet 51a connected to the gas reservoir 30 and an outlet 51b connected to the interior of the first liquid reservoir 10. In the embodiment depicted in Fig. 1, the gas line 51 comprises an end section extending into the first liquid reservoir 10 parallel to a longitudinal axis L. Alternatively, a hole in the shell delimiting the first liquid reservoir 10 may serve as the outlet 51b. The gas line 51 comprises a gas valve 61 configured to close and/or open the gas line 51. When the gas valve 61 is opened, the gas contained in the gas reservoir 30 enters the first liquid reservoir 10 through the outlet 51b.

The first liquid reservoir 10 is connected to a cartridge 2 having a volume V in which a medium 40 for purifying and/or enhancing the aqueous liquid A is disposed. The first liquid reservoir 10 is connected to a first port 41a of the cartridge 2 by a first fluid line 52 having an inlet 52a disposed in the first liquid reservoir 10 and an outlet 52b in fluid connection with the interior of the cartridge 2 by means of the first port 41a. The first fluid line 52 may also branch into the volume V or may be connected to a connector or docking mechanism comprising the first port 41a. The inlet 52a of the first fluid line 52 is arranged adjacent to a bottom wall 11 of the first liquid reservoir 10 and is separated from the bottom wall 11 by a distance d along the longitudinal axis L. The first fluid line 52 comprises a first fluid valve 62 configured to open and/or close the first fluid line 52.

The cartridge 2 as well as the gas reservoir 30 comprises a means of identification 3, e.g. a radio frequency identification tag, identifying properties such as the type of medium 40 contained in the cartridge 2 or the age of the cartridge 2. The means of identification 3 may be readable by the control device 90 (as indicated in Fig. 1 by dashed lines representing e.g. wireless connections) which may adapt the purification, enhancement and/or carbonating process according to the components identified by the means of identification 3.

As an alternative to a removable cartridge 2, a fixed (i.e. non-removable) container that provides a volume to load the medium 40 into may be applied for all embodiments of the invention.

Furthermore, a pressure equalizing line 54 (in the example shown in Fig. 1 branching off the gas line 51 connects the first liquid reservoir 10 to the environment via an optional pressure equalizing valve 64 configured to close and open the pressure equalizing line 54 and via a safety valve 65 which opens at a specified pressure, releasing gas into the environment, to protect the device 1 from overpressure and to set the operating pressure in the first liquid reservoir 10. Of course, it is also possible to connect the pressure equalizing valve 64 directly to the first liquid reservoir 10 within the scope of the present invention.

A second port 41b of the cartridge 2 containing the medium 40 is connected to the second liquid reservoir 20 by a second fluid line 53, such that the medium 40 can be brought in fluid connection with the interior of the second liquid reservoir 20. The second liquid reservoir 20 comprises an opening 21 arranged in a bottom wall 22 of the second liquid reservoir 20 which delimits the second liquid reservoir 20 perpendicular to a longitudinal axis L. The second fluid line 53 is in turn connected to the environment of the device 1 by a further optional pressure equalizing valve 64a.

To carbonate, purify and/or enhance an aqueous liquid A, the aqueous liquid A is first provided in the first liquid reservoir 10. The first fluid valve 62 and the pressure equalizing valve 64 are closed to isolate the first liquid reservoir 10, and the gas valve 61 is then opened, such that gas, particularly CO₂, flows from the gas reservoir 30 to the first liquid reservoir 10, particularly until the safety valve 65 opens when the desired pressure in the first liquid reservoir 10 is reached. The gas may be at least partially dissolved in the aqueous liquid A contained in the first liquid reservoir 10, wherein in case the gas is CO₂, the aqueous liquid is carbonated. In particular, the aqueous liquid A is filled into the first liquid reservoir 10 such that the outlet 51b is submerged in the aqueous liquid A, which improves dissolution of the gas in the aqueous liquid A. Alternatively, the outlet 51b may also be arranged above the surface of the aqueous liquid A, such that the gas is mixed with the air above the aqueous liquid A, and the gas may subsequently enter the liquid by diffusion.

The optional safety valve 65 ensures that the pressure in the first liquid reservoir 10 does not increase above a critical value at which components of the device 1 may be damaged by overpressure. To this end, the safety valve 65 opens to the environment above the critical pressure value, e.g. about 4 bar above ambient pressure, releasing gas into the environment.

After adding a desired amount of gas to the first liquid reservoir 10 or when a desired pressure is reached in the first liquid reservoir 10 (which may be monitored by a pressure sensor), the gas valve 61 is closed, particularly automatically, i.e. controlled by a control device 90 (dashed lines indicating e.g. electric connections from the control device 90 to the valves 61, 62, 64, 64a).

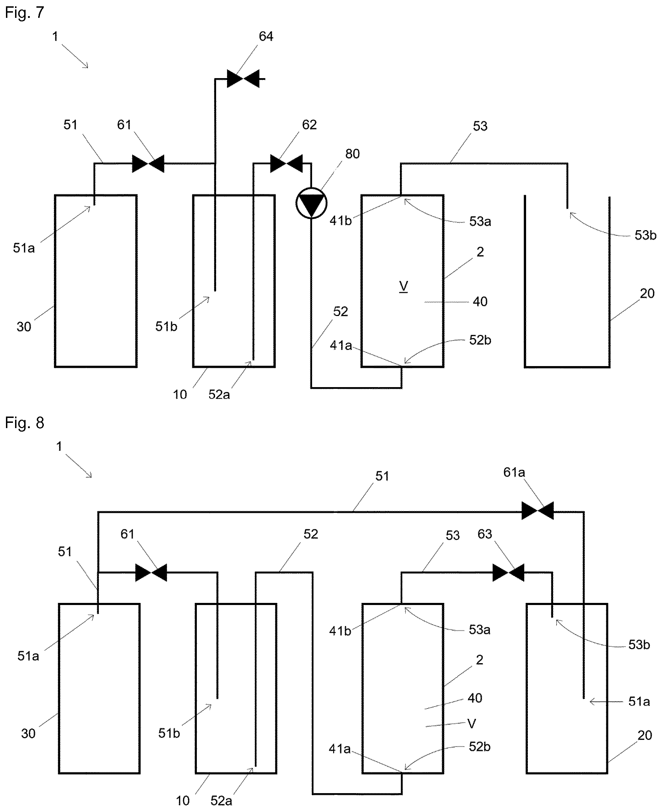

The second fluid valve 62 is then opened while the gas valve 61 and the pressure equalizing valves 64, 64a are closed, to establish a flow connection between the first liquid reservoir 10 and the second liquid reservoir 20 via the medium 40 in the cartridge 2. A flow of the aqueous liquid A from the first liquid reservoir 10 to the second liquid reservoir 20 via the medium 40 is particularly driven by the pressure difference between the first liquid reservoir 10 and the second liquid reservoir 20. Alternatively, as shown in Fig. 7, the aqueous liquid may also be moved from the first liquid reservoir 10 to the second liquid reservoir 20 by a pump 80.

During passing the medium 40, the aqueous liquid A is purified by removing components (e.g. by mechanical filtering or adsorption to activated carbon) or enhanced by adding components (e.g. mineral salts) or both.

To pass the aqueous liquid A back from the second liquid reservoir 20 to the first liquid reservoir 10, the gas valve 61 remains closed, the first fluid valve 62 remains open and the pressure equalizing valve 64 is opened to release the remaining pressure from the first liquid reservoir 10. In turn, the resulting pressure in the second liquid reservoir 20 is higher than the pressure in the first liquid reservoir 10 and the aqueous liquid A flows back through the medium 40 to the first liquid reservoir 10. In this second pass through the medium 40, further purification and/or enhancement of the aqueous liquid A may take place.

In order to ensure that essentially all of the aqueous liquid A is removed from the second liquid reservoir 20, it is of advantage to arranged the second liquid reservoir 20 above the cartridge 2 harboring the medium 40, particularly with the longitudinal axis L arranged vertically and the opening 21 on the bottom of the second liquid reservoir 20.

When the aqueous liquid A has been passed back to the first liquid reservoir 10, any remaining pressure may be released to the environment from the second liquid reservoir 20 by opening the pressure equalizing valve 64a.

If desired additional gas, particularly CO₂, can be added to the aqueous liquid in the first liquid reservoir 10 by opening the gas valve 61 a second time (while valves 62 and 64 are closed) after purification / enhancement. Purified, enhanced and optionally carbonated water can then obtained from the first liquid reservoir 10.

A further configuration of the device 1 is illustrated in Fig. 2. This device 1 is identical to the device 1 shown in Fig. 1 except that the cartridge 2 here incorporates both the media 40a, 40b and the second liquid reservoir 20.

A first medium 40a being activated carbon C is disposed in a first volume V1 adjacent the first port 41a of the cartridge 2, and a second medium 40b being mineral salts M is arranged in a second volume V2 adjacent the first volume V1, such that the aqueous liquid A first passes the first medium 40a (activated carbon C) and subsequently passes the second medium 40b (mineral salts M) when flowing from the first liquid reservoir 10 to the second liquid reservoir 20. The second liquid reservoir 20 is formed by an empty space inside the cartridge 2 adjacent the second volume V2. Accordingly, during the first pass, the aqueous liquid A is first purified and then enhanced by addition of mineral salts M. In particular, the depicted setup with a first medium 40a and a second medium 40b can be combined with all embodiments of the invention.

Similar to the cartridge 2 shown in Fig. 1, the cartridge 2 of the device 1 depicted in Fig. 2 comprises a means of identification 3.

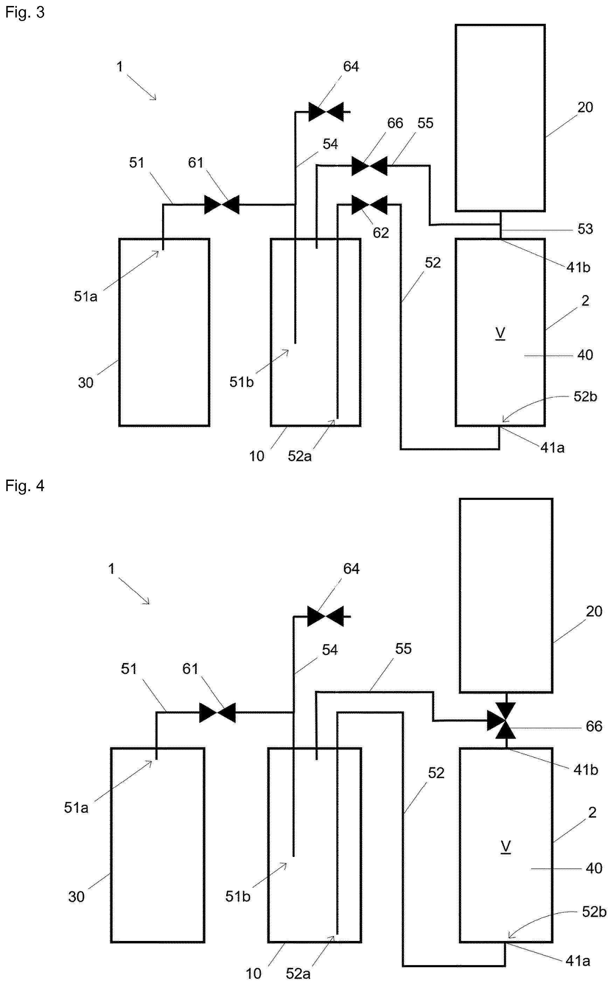

Fig. 3-5 show variants of the setup illustrated in Fig. 1 with an additional return line 55 between the second liquid reservoir 20 and the first liquid reservoir 10, through which the purified and/or enhanced aqueous liquid A may be transported back from the second liquid reservoir 20 to the first liquid reservoir 10 without passing the medium 40 in the cartridge 2 a second time. In the depicted examples, the return line 55 branches off from the second fluid line 53, but of course the return line 55 may also be directly connected to the second liquid reservoir 20.

According to the embodiment of Fig. 3, the device 1 comprises a return line valve 66 configured to open and close the return line 55 (e.g. controlled by a control device 90 as shown in Fig. 1). To move the aqueous liquid A back from the second liquid reservoir 20 to the first liquid reservoir 10 driven by a pressure difference between the reservoirs 20,10, the pressure equalizing valve 64 is opened to de-pressurize the first liquid reservoir 10, the first fluid valve 62 is closed to avoid liquid flowing back via the first fluid line 52, and the return line valve 66 is opened.

Fig. 4 illustrates a similar embodiment, in which the device 1 comprises a three-way-valve 66 connecting the second port 41b of the cartridge 2, the second liquid reservoir 20 and the return line 55. To move the aqueous liquid A from the first liquid reservoir 10 via the medium 40 to the second liquid reservoir 20, the three-way valve is controlled (e.g. by a control device 90 as displayed in Fig. 1) such that a fluid path opens between the cartridge 2 and the second liquid reservoir 20, whereas the fluid path through the return line 55 is closed. In contrast, to pass the aqueous liquid A back from the second liquid reservoir 20 to the first liquid reservoir 10, the three-way-valve is set such that the fluid path between the second liquid reservoir 20 and the cartridge 2 is closed while a fluid path between the second liquid reservoir 20 and the return line 55 opens, such that the liquid may pass from the second liquid reservoir 20 through the three-way valve 66 and the return line 55 to the first liquid reservoir 10 driven by the pressure difference.

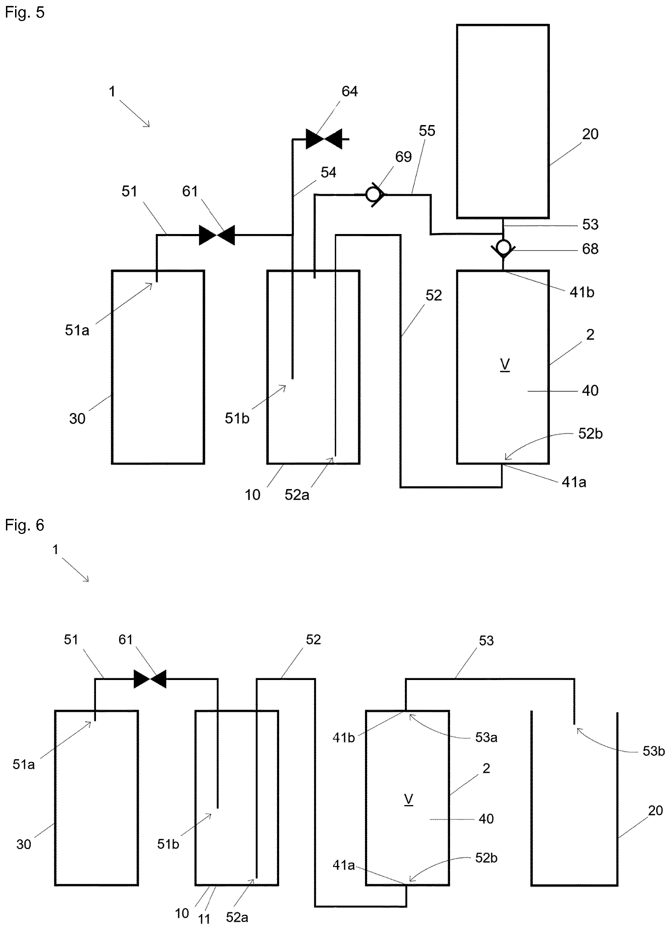

Fig. 5 shows a further alternative setup comprising a first check valve 68 placed in the second fluid line 53 and a second check valve 69 disposed in the return line 55. The first check valve 68 is open in the direction between the cartridge 2 and the second liquid reservoir 20 and closed in the opposite direction. The second check valve 69 is open in the direction from the second liquid reservoir 20 towards the first liquid reservoir 10 through the return line 55 and closed in the opposite direction. Hence, the aqueous liquid A may first pass through the medium 40 into the second liquid reservoir 20 and back through the return line 55 to the first liquid reservoir 10.

Fig. 6 shows a further alternative configuration of the device 1. The device 1 comprises a first liquid reservoir 10 connected to a gas reservoir 30 via a gas line 51 as described above. As in the previous embodiment, the gas line 51 can be closed and opened by a gas valve 61. The first liquid reservoir 10 is connected to the cartridge 2 containing the medium 40 by a first fluid line 52, the inlet 52a of which is placed close to a bottom wall 11 of the first liquid reservoir 10. The cartridge 2 is connected at its second port 41b to a second fluid line 53 leading to the second liquid reservoir 20.

In particular, the second liquid reservoir 20 is a removable bottle, carafe or glass in this embodiment, and the first liquid reservoir 10 may be a storage tank or a further bottle.

When the gas valve 61 is opened, gas flows into the first liquid reservoir 10, pressurizing and (in case of CO₂) carbonating the aqueous liquid provided in the first liquid reservoir 10. The second liquid reservoir 20 is open to the environment and therefore at atmospheric pressure in the embodiment depicted in Fig. 6. Thus, upon pressurizing the first liquid reservoir 10, the aqueous liquid A is driven through the medium 40 into the second liquid reservoir 20 by the pressure difference between the first and second liquid reservoirs 10,20. Purified, enhanced, and optionally carbonated water can then be obtained from the second liquid reservoir 20. The amount of CO₂ in the aqueous liquid A depends on the amount of CO₂ added in the first liquid reservoir 10 and optionally on the amount of CO₂ used up in the medium 40 (e.g. by chemical reactions involving added mineral salts). An additional first fluid valve 62 may be added to the device 1 shown in Fig. 6 to close the first fluid line 52 when the gas is added to the first liquid reservoir 10. This improves carbonation in case of CO₂, since the aqueous liquid A in the first liquid reservoir 10 is exposed to the gas and pressure is retained for a longer period of time.

A further configuration of the device 1 is shown in Fig. 7. The depicted setup is the same as shown in Fig. 6, except that an additional pump 80 is provided to move the aqueous liquid A from the first liquid reservoir 10 through the medium 40 to the second liquid reservoir 20, and that additionally a first fluid valve 62 configured to open and close the first fluid line 52 and a pressure equalizing valve 64 for de-pressurizing the first liquid reservoir 10 are provided.

To operate the system, the first fluid valve 62 and the pressure equalizing valve 64 are first closed to isolate the first liquid reservoir 10 from the environment. The gas valve 61 is then opened to add gas, particularly CO₂ to the aqueous liquid A in the first liquid reservoir 10. Subsequently, the pressure equalizing valve 64 is opened to release the pressure from the first liquid reservoir 10. The first fluid valve 62 is then opened and the pump 80 is turned on to pump the aqueous liquid through the medium 40 into the second liquid reservoir 20, from which purified, enhanced and optionally carbonated liquid may be removed.

Fig. 8, which is according to the invention, shows a further alternative to the setup illustrated in Fig. 6. In the depicted device 1, a further gas line 51 directly connects the gas reservoir 30 with the second liquid reservoir 20 and the second liquid reservoir 20 is closed from the environment. The connection between the gas reservoir 30 and the second liquid reservoir 20 can be opened and/or closed by a second gas valve 61a. By this additional connection, gas may be added to the aqueous liquid A after having passed from the first liquid reservoir 10 to the second liquid reservoir 20, for example to add additional CO₂ for carbonation after some or all of the CO₂ added into the first liquid reservoir 10 has been used up during passing the medium 40. To avoid the aqueous liquid A being pressed back through the medium 40 when the second liquid reservoir 20 is pressurized a second fluid valve 63 is provided to close and open the second fluid line 53 between the cartridge 2 comprising the medium 40 and the second liquid reservoir 20.

Fig. 9A and 9B schematically depict the method using a similar device 1 as shown in Fig. 6 and described above, except for an additional first fluid valve 62 to open and close the first fluid line 52 between the first liquid reservoir 10 and the cartridge 2. Similar to the device 1 shown in Fig. 2, the cartridge 2 comprises a first medium 40a being activated carbon C and a second medium 40b being mineral salts M. The first medium 40a is placed in a first volume V1 inside the cartridge 2 and the second medium 40b is placed in a second volume V2 inside the cartridge 2.

Fig. 9A shows the initial situation where the aqueous liquid A is provided in the first liquid reservoir 10. Subsequently, the gas valve 61 is opened and the first fluid valve 62 is closed to pressurize and optionally carbonate the aqueous liquid A in the first liquid reservoir 10. Subsequently, the gas valve 61 is closed and the first fluid valve 62 is opened, such that the aqueous liquid A flows first through the first medium 40a, where it is purified by activated carbon C, and then through the second medium 40b, where it is enhanced by addition of mineral salts M, into the second liquid reservoir 20 (see Fig. 9B) driven by the pressure difference between the first liquid reservoir 10 and the second liquid reservoir 20.

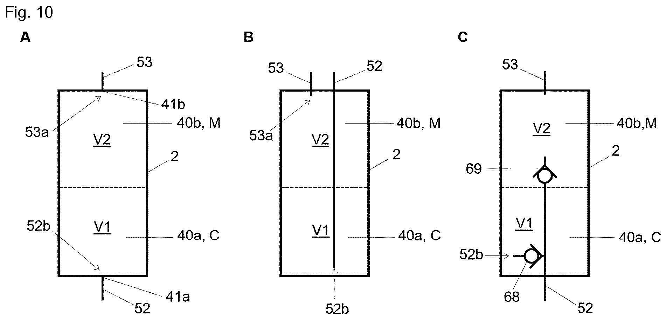

Fig. 10A-C schematically depict three alternative embodiments of the cartridge 2, each forming a first volume V1 for containing a first medium 40a and a second volume V2 for containing a second medium 40b adjacent the first volume V1.

The cartridge 2 according to Fig. 10A comprises a first port 41a leading to the first volume V1 and a second port 41b leading to the second volume V2 as described above and shown in Fig. 2 and Fig. 9A. The first port 41a is connected to the first fluid line 52 and the second port 41b is connected to the second fluid line 53. Depending on whether a return line 55 is provided, this setup of the cartridge 2 may be used for one or two passes through the first and second medium 40a,40b. During the first pass, the first port 41a serves as an inlet and the second port 41b serves as an outlet, such that the aqueous liquid A first passes the first medium 40a and subsequently the second medium 40b. The first fluid line 52 and the second fluid line 53 are positioned on opposite sides of the cartridge 2.

In contrast, the first fluid line 52 and the second fluid line 53 are disposed on the same side of the cartridge 2 (adjacent to the second volume V2) according to the embodiment shown in Fig. 10B which may save installation space and provides a configuration that allows for a docking mechanism on one side of the cartridge 2. An end section of the first fluid line 52 extends into the first volume V1, such that its outlet 52b is arranged in the first volume V1. Accordingly, at least during the first pass through the cartridge 2, the aqueous liquid A first passes the first medium 40a and subsequently the second medium 40b in spite of the fluid lines 52, 53 being on the same side of the cartridge 2.

Fig. 10C show a further embodiment of the cartridge 2, where the first fluid line 52 extends into the first volume V1 and the second volume V2. The first fluid line 52 is in fluid connection with the first volume V1 via a first check valve 68 allowing flow in the direction from the first liquid reservoir 10 to the first volume V1 and blocking flow in the opposite direction. The first fluid line 52 is in fluid connection with the second volume V2 via a second check valve 69 allowing flow in the direction from the second volume V2 back to the first liquid reservoir 10 and blocking flow in the opposite direction. The second fluid line 53 is directly connected to the second volume V2.

Therefore, when the aqueous liquid L flows from the first liquid reservoir 10 towards the second liquid reservoir 20, the first check valve 68 opens and the second check valve 69 closes, such that the aqueous liquid A first enters the first volume V1 and subsequently the second volume V2 of the cartridge 2. On the way back from the second liquid reservoir 20, the aqueous liquid A enters the second volume V2 from the second fluid line 53 and then flows back into the first fluid line 52 via the second check valve 69.

This embodiment allows to implement two passes through the second medium 40b and only one pass through the first medium 40a. If the aqueous liquid A is purified by the first medium 40a and enhanced by the second medium 40b, this advantageously avoids that healthy components added during enhancement are retained by the first medium 40a during the second pass.

With reference to Fig. 1, the main steps of the method using this cartridge can be summarized as follows:
- An aqueous liquid, particularly water, is provided in the first liquid reservoir 10 and the first liquid reservoir 10 is connected to the device 1. The first liquid reservoir 10 may be a bottle that can withstand pressure and has a typical volume of 1 liter. A first fluid line 52 with its inlet 52a reaches to the bottom wall 11 of the bottle.
- The process may then be activated through a push on a button or through an app. In particular to this end, a microcontroller may be connected to the valves 61, 62, 64 and/or 64a.
- The first fluid valve 62 is opened to prepare for water to flow through. The second fluid valve 63 and the pressure equalizing valve 64a are closed to make the whole system a closed volume so that gas will not escape.
- CO₂ is added into the first liquid reservoir 10 (until p = 4 bar) by opening and closing the gas valve 61. A safety valve 65 opens at 4 bar releasing gas and protecting the first liquid reservoir 10 and the rest of the system from overpressure.
- Water is pressed from the first liquid reservoir 10 through the medium 40 to the second liquid reservoir 20, because the second liquid reservoir 20 is still at atmospheric pressure and the first liquid reservoir 10 is now at high pressure (4 bar). Since the input 52a in the first liquid reservoir 10 is at the bottom, all the water is pressed out. The gas that is already present in the second liquid reservoir 20 gets compressed.
- Once (almost) all water has passed through the medium and has reached the second liquid reservoir, the pressure equalizing valve 64 is opened to release the pressure in the first liquid reservoir 10 to the environment.
- Water is pressed back from the second liquid reservoir 20 to the first liquid reservoir 10, since now the second liquid reservoir 20 is still at high pressure and the first liquid reservoir 10 is at atmospheric pressure.
- The first fluid valve 62 and the pressure equalizing valve 64 are closed to make the first liquid reservoir 10 a closed volume.
- The second pressure equalizing valve 64a is opened to release the last bit of pressure and put the second liquid reservoir 20 at atmospheric pressure for the next round.
- Additional CO₂ can be added for fizz by opening the gas valve 61 one or more times to inject more CO₂ to create sparkling water.
- The pressure equalizing valve 64 is opened to release pressure in the first liquid reservoir 10, so the user can remove it.
- The user removes the first liquid reservoir 10 and drinks filtered, mineralized and carbonated water.

The complete process may be controlled/timed electronically (valve, gas release).

According to one embodiment of the invention (purification only), water is purified without enhancement, where the medium 40 only removes components from the water. Activated carbon and/or some kind of (mechanical) filter may be used in the medium 40. The type of gas injected into the aqueous liquid is not important in this case (could be pressurized air, nitrogen, etc.). The activated carbon can be a granulate or a block, wherein a block further adds more mechanical filtering capability to the medium. The main function of activated carbon is that it removes components like chloride.

According to a further embodiment of the invention (mineralization through simple dissolution), the medium 40 may contain mineral salts that are dissolved in the water with or without additional components for purification.

According to a further embodiment (mineralization through simple dissolution with CO₂), the gas may be CO₂ and the medium may contain minerals that are dissolved through a reaction with the dissolved CO₂. The dissolved CO₂ may create carbonic acid that reacts with the carbonates in the mineral salts. For faster dissolution of CO₂ in the water, the outlet 51b of the gas line 51 can be positioned in the first liquid reservoir 10 so that it is submerged in the water. This embodiment can be applied with or without additional components for purification.

According to a further embodiment (using pressure to return water), depicted in Fig. 1-6 and 8-10, which can be combined with any of the above embodiments, the second liquid reservoir 20 is closed and the pressure is used to push the water back to the first liquid reservoir 10 (either through separate return line 55, or in a second pass through the medium 40). To this end, one more valve is needed, namely a pressure equalizing valve 64 in the first liquid reservoir 10. Furthermore, the volume of the second liquid reservoir 20 should be similar or larger than that of the first liquid reservoir 10, and the opening 21 forming the exit of the second liquid reservoir 20 should be on a bottom wall 22 of the second liquid reservoir 20.

In a further embodiment, the second liquid reservoir 20 is at least partly transparent, such that the method according to the invention is visible to the user.

According to a further embodiment, the cartridge 2 may contain a means of identification 3, particularly an RFID chip, through which the controller keeps track of its lifetime and/or adjusts the method/procedure based on the type of the cartridge or medium 40.

According to a further embodiment, as shown e.g. in Fig. 2, for the functioning of the mineralization and purification, the second liquid reservoir 20 and the cartridge (i.e. medium 40) can be combined into one volume. To this end, enough empty space is needed next to and/or in between the medium 40 to hold the water that is pushed from the first liquid reservoir 10 including accommodating for the compression of the air.

According to the method not according to the claimed invention shown in Fig. 9a and 9b (production of still water, without sparkling), the amount of CO₂ injected and the contact time with minerals may be controlled such that almost all of the CO₂ has reacted with the minerals and the resulting water is still water. In particular, the amount of CO₂ may be controlled by opening the gas valve 61 longer or shorter, injecting CO₂ above water level instead of inside the water, and/or adjusting the pressure of the CO₂ gas (by a regulator and/or safety release). The contact time with minerals may be controlled by appropriately setting the time between opening and closing the pressure equalizing valve 64, and/or doing only a single pass through the minerals (i.e. using a bypass through return line 55 on back flow).

In some cases, it is desired to pass the water through the cartridge / medium 40 only once, or in only one direction, e.g., to control the level of components/minerals released into the water, or because a mechanical filter is used for which the captured particles should not be washed back.

To this end, according to some embodiments, two valves are added (see Fig. 3): during gas injection valve 62 is opened and valve 66 is closed: water flows through the cartridge / medium 40 to the second liquid reservoir 20. When valve 64 is opened to release the pressure in the first liquid reservoir and to let the water flow back, valve 62 is closed and valve 66 is opened. Alternatively, a three-way valve 66 may be applied between the cartridge / medium 40 and the second liquid reservoir 20 (see Fig. 4).

In some embodiments of the invention (extra carbonation after purifying/enhancement), after water is pushed back to the first liquid reservoir 10, the first liquid reservoir 10 is isolated and one or more pulses of CO₂ are given from the gas reservoir 30. To this end, an additional first fluid valve 62 is needed to isolate the first liquid reservoir to prevent water from being pushed through the cartridge / medium 40 again.

In certain embodiments, the cartridge or medium 40 can consist of multiple parts. E.g., a separate activated carbon cartridge / medium 40 and a separate mineral cartridge/medium 40 may be provided.

In certain embodiments, the gas reservoir 30 comprises a means of identification, particularly an RFID chip.

In certain embodiments, the device or system comprises one or more sensors to adjust the method according to the invention based on properties such as water temperature (influences CO₂ dissolution), water conductivity (changes when minerals are dissolved), pressure (indicating the level of gas) and/or time (e.g. to indicate possible bacterial growth)

In certain embodiments, the gas line 51 and/or the first fluid line 52 is an integrated part of the first liquid reservoir and particularly matches with corresponding connectors on the device.

**List of reference numerals**

| | |
|---|---|
| Device | 1 |
| Cartridge | 2 |
| Means of identification | 3 |
| First liquid reservoir | 10 |
| Bottom wall | 11 |
| Second liquid reservoir | 20 |
| Opening | 21 |
| Bottom wall | 22 |
| Gas reservoir | 30 |
| Medium | 40 |
| First medium | 40a |
| Second medium | 40b |
| First port | 41a |
| Second port | 41b |
| Gas line | 51 |
| First fluid line | 52 |
| Second fluid line | 53 |
| Pressure equalizing line | 54 |
| Return line | 55 |
| Inlet | 51a, 52a, 53a, 54a, 55a, 56a |
| Outlet | 51b, 52b, 53b, 54b, 55b, 56b |
| Gas valve | 61, 61a |
| First fluid valve | 62 |
| Second fluid valve | 63 |
| Pressure equalizing valve | 64, 64a |
| Return line valve | 66 |
| First check valve | 68 |
| Second check valve | 69 |
| Pump | 80 |
| Control device | 90 |
| Aqueous liquid | A |
| Activated carbon | C |
| Minerals | M |
| Longitudinal axis | L |
| Distance | d |
| Height | H |
| Volume | V |
| First volume | V1 |
| Second volume | V2 |

## Claims

1. A device (1) for purifying, enhancing and/or carbonating an aqueous liquid (A) comprising
- a gas line (51) for connecting a gas reservoir (30) containing a pressurized gas with a first liquid reservoir (10), so that the first liquid reservoir (10) can be pressurized,
- a further gas line (51) configured to directly connect the gas reservoir (30) with a second liquid reservoir (20), wherein the second liquid reservoir (20) is closed from the environment,
- at least one fluid line (52, 53) for connecting the first liquid reservoir (10) with the second liquid reservoir (20) via at least one medium (40) for purifying and/or enhancing the aqueous liquid (A), wherein the device (1) is configured to move the aqueous liquid (A) from the first liquid reservoir (10) through said medium (40) the into the second liquid reservoir (20),
- a second gas valve (61a) arranged and configured to open and/or close the further gas line (51), such that the device is configured for addition of gas to the aqueous liquid (A) after having passed from the first liquid reservoir (10) to the second liquid reservoir (20) through the at least one medium (40),
wherein the device (1) comprises a second fluid valve (63), wherein the second fluid valve (63) is arranged and configured to close and open the second fluid line (53) between a cartridge (2) comprising the medium (40) and the second liquid reservoir (20), to avoid the aqueous liquid (A) being pressed back through the medium (40), when the second liquid reservoir (20) is pressurized and wherein the device (1) comprises said medium (40), wherein the medium (40) is configured to add at least one substance to said aqueous liquid (A), particularly by dissolution of the substance in said aqueous liquid (A), when the aqueous liquid (A) is brought in contact with said medium (40), thereby enhancing said aqueous liquid (A), wherein particularly said medium (40) comprises at least one mineral salt, particularly calcium carbonate or magnesium carbonate, and/or at least one oil, particularly cannabidiol.

2. The device (1) according to claim 1, **characterized in that** the device (1) comprises a pump (80) configured to move the aqueous liquid (A) from the first liquid reservoir (10) through the medium (40) into the second liquid reservoir (20), or **in that** the device (1) is configured to move the aqueous liquid (A) from the first liquid reservoir (10) through the medium (40) into the second liquid reservoir (20) driven by a pressure difference between the first liquid reservoir (10) and the second liquid reservoir (20) when the first liquid reservoir (10) is pressurized.

3. The device (1) according to claim 1 or 2, **characterized in that** the device (1) comprises a pressure equalizing valve (64) connecting the first liquid reservoir (10) to the environment of the device (1), such that the aqueous liquid (A) flows back from the second liquid reservoir (20) to the first liquid reservoir (10) driven by a pressure difference between the second liquid reservoir (20) and the first liquid reservoir (10) when the second liquid reservoir (20) is closed from the environment, such that the aqueous liquid (A) flowing into the second liquid reservoir (20) builds up pressure in the second liquid reservoir (20) and when the pressure in the first liquid reservoir (10) is reduced by releasing gas to the environment by means of the pressure equalizing valve (64).

4. The device (1) according to claim 3, **characterized in that** the device (1) comprises a return line (55) connecting the second liquid reservoir (20) to the first liquid reservoir (10), such that the aqueous liquid (A) flows back from the second liquid reservoir (20) to the first liquid reservoir (10) via the return line (55) when the pressure in the first liquid reservoir (10) is reduced by releasing gas to the environment by means of the pressure equalizing valve (64), wherein particularly the device (1) comprises a return line valve (66) for opening and/or closing the return line (55), wherein more particularly said return line valve (66) is a three-way valve between the medium (40), the second liquid reservoir (20) and the return line (55).

5. The device (1) according to one of the preceding claims, **characterized in that** the at least one fluid line (52, 53) is configured to be connected to a removable cartridge (2), wherein said cartridge (2) contains said medium (40).

6. The device according to claim 5, wherein said cartridge (2) further comprises said second liquid reservoir (20).

7. The device according to claim 5 or 6, **characterized in that** said cartridge (2) comprises a means of identification (3), particularly for tracking the lifetime of the cartridge (2) and/or identifying a type of the cartridge (2), wherein particularly the means of identification (3) is an RFID chip.

8. The device (1) according to one of the preceding claims, **characterized in that** the device comprises said gas reservoir (30), wherein the gas reservoir (30) contains CO₂ gas, such that the aqueous liquid (A) contained in the first liquid reservoir (10) is carbonated when the first liquid reservoir (10) is pressurized, wherein particularly said medium (40) comprises at least one mineral salt, the solubility of which is increased in the presence of CO₂, carbonic acid, carbonate ions, hydrogen carbonate ions or an acidic pH.

9. The device (1) according to one of the preceding claims, **characterized in that** the device (1) comprises said medium (40), wherein the medium (40) is configured to remove at least one substance from said aqueous liquid (A) when the aqueous liquid (A) is brought in contact with said medium (40), thereby purifying said aqueous liquid (A), wherein particularly said medium (40) comprises activated carbon, an ion exchange material and/or a filter.

10. The device (1) according to one of the preceding claims, **characterized in that** the device (1) comprises a control device (90), wherein said control device (90) is configured to control said pressure equalizing valve (64) and/or at least one valve (61, 62, 63, 66) configured to open and/or close a gas line (51) connecting said gas reservoir (30) with said first liquid reservoir (10), said at least one fluid line (52, 53), and/or said return line (55).

11. A method for purifying, enhancing and/or carbonating an aqueous liquid (A) using the device (1) according to one of the claims 1-10, wherein
a. Said aqueous liquid (A) is provided in the first liquid reservoir (10),
b. the first liquid reservoir (10) is pressurized,
c. the aqueous liquid (A) is moved from said first liquid reservoir (10) through the medium (40) for purifying and/or enhancing said aqueous liquid (A) to the second liquid reservoir (20), particularly driven by a pump (80) or by a pressure difference between the first liquid reservoir (10) and the second liquid reservoir (20),
d. the second fluid valve (63) arranged and configured to close and open the second fluid line (53) is closed and
e. gas is added to the aqueous liquid (A) via the further gas line (51) directly connecting the gas reservoir (30) with the second liquid reservoir (20), after the aqueous liquid (A) passed from the first liquid reservoir (10) to the second liquid reservoir (20) through the at least one medium (40).

12. The method according to claim 11, wherein
a. at least one substance is added to said aqueous liquid (A) by said medium (40), particularly by dissolution of the substance in said aqueous liquid (A), when the aqueous liquid (A) is brought in contact with said medium (40), thereby enhancing said aqueous liquid (A), wherein particularly said medium (40) comprises at least one mineral salt, particularly calcium carbonate or magnesium carbonate, and/or at least one oil, particularly cannabidiol and/or
b. at least one substance is removed from said aqueous liquid (A) by said medium (40) when the aqueous liquid (A) is brought in contact with said medium (40), thereby purifying said aqueous liquid (A), wherein particularly said aqueous liquid (A) is filtered or components of said aqueous liquid (A) are adsorbed to the medium (40).

13. The method according to claim 11 or 12, wherein the first liquid reservoir (10) is pressurized by injecting CO₂ gas into the first liquid reservoir (10), such that said aqueous liquid (A) contained in the first liquid reservoir (10) is carbonated.

14. The method according to claim 13, wherein the solubility of least one mineral salt comprised in the medium (40) is increased by CO₂, carbonic acid, carbonate ions and/or hydrogen carbonate ions in the carbonated aqueous liquid and/or by an acidic pH of the carbonated aqueous liquid (A).

15. The method according to claim 14, wherein the amount of CO₂ injected into the first liquid reservoir (10) and/or the contact time with said mineral salts in said medium (40) is controlled such that
a. a still aqueous liquid (A) having a CO₂ gas concentration of less than 1 g/l, particularly less than 0,5 g/l, more particularly less than 0,25 g/l, is obtained or,
b. a carbonated aqueous liquid (A) having a CO₂ gas concentration of 1 g/l or more, particularly 2,5 g/l or more, is obtained.

## Patentansprüche

1. Eine Vorrichtung (1) zur Reinigung, Verstärkung und/oder Carbonylierung einer wässrigen Flüssigkeit (A), umfassend
- eine Gasleitung (51) zum Verbinden eines Gasbehälters (30), der ein unter Druck stehendes Gas enthält, mit einem ersten Flüssigkeitsbehälter (10), so dass der erste Flüssigkeitsbehälter (10) unter Druck gesetzt werden kann,
- eine weitere Gasleitung (51), die dazu konfiguriert ist, den Gasbehälter (30) direkt mit einem zweiten Flüssigkeitsbehälter (20) zu verbinden, wobei der zweite Flüssigkeitsbehälter (20) gegenüber der Umgebung geschlossen ist,
- mindestens eine Fluidleitung (52, 53) zum Verbinden des ersten Flüssigkeitsbehälter (10) mit dem zweiten Flüssigkeitsbehälter (20) über mindestens ein Medium (40) zur Reinigung und/oder Verstärkung der wässrigen Flüssigkeit (A), wobei die Vorrichtung (1) so konfiguriert ist, dass sie die wässrige Flüssigkeit (A) aus dem ersten Flüssigkeitsbehälter (10) durch das Medium (40) in den zweiten Flüssigkeitsbehälter (20) bewegt,
- ein zweites Gasventil (61a), das so angeordnet und konfiguriert ist, dass es die weitere Gasleitung (51) öffnet und/oder schließt, so dass die Vorrichtung so konfiguriert ist, dass Gas zu der wässrigen Flüssigkeit (A) hinzugefügt wird, nachdem diese durch das mindestens eine Medium (40) von dem ersten Flüssigkeitsbehälter (10) zu dem zweiten Flüssigkeitsbehälter (20) gelangt ist,
wobei die Vorrichtung (1) ein zweites Fluidventil (63) umfasst, wobei das zweite Fluidventil (63) so angeordnet und konfiguriert ist, dass es die zweite Fluidleitung (53) zwischen einer Kartusche (2), die das Medium (40) umfasst, und dem zweiten Flüssigkeitsbehälter (20) schließt und öffnet, um zu verhindern, dass die wässrige Flüssigkeit (A) durch das Medium (40) zurückgedrückt wird, wenn der zweite Flüssigkeitsbehälter (20) unter Druck gesetzt wird, und wobei die Vorrichtung (1) das Medium (40) umfasst, wobei das Medium (40) so konfiguriert ist, dass es der wässrigen Flüssigkeit (A) mindestens eine Substanz hinzufügt, insbesondere durch Auflösung der Substanz in der wässrigen Flüssigkeit (A), wenn die wässrige Flüssigkeit (A) mit dem Medium (40) in Kontakt gebracht wird, wodurch die wässrige Flüssigkeit (A) verstärkt wird, wobei insbesondere das Medium (40) mindestens ein Mineralsalz, insbesondere Calciumcarbonat oder Magnesiumcarbonat, und/oder mindestens ein Öl, insbesondere Cannabidiol, umfasst.

2. Die Vorrichtung (1) nach Anspruch 1, **dadurch gekennzeichnet, dass** die Vorrichtung (1) eine Pumpe (80) umfasst, die so konfiguriert ist, die wässrige Flüssigkeit (A) vom ersten Flüssigkeitsbehälter (10) durch das Medium (40) in den zweiten Flüssigkeitsbehälter (20) zu bewegen, oder **dadurch gekennzeichnet, dass** die Vorrichtung (1) so konfiguriert ist, die wässrige Flüssigkeit (A) vom ersten Flüssigkeitsbehälter (10) durch das Medium (40) in den zweiten Flüssigkeitsbehälter (20) aufgrund eines Druckunterschieds zwischen dem ersten Flüssigkeitsbehälter (10) und dem zweiten Flüssigkeitsbehälter (20) zu bewegen, wenn der erste Flüssigkeitsbehälter (10) unter Druck gesetzt wird.

3. Die Vorrichtung (1) nach Anspruch 1 oder 2, **dadurch gekennzeichnet, dass** die Vorrichtung (1) ein Druckausgleichsventil (64) umfasst, das den ersten Flüssigkeitsbehälter (10) mit der Umgebung der Vorrichtung (1) verbindet, so dass die wässrige Flüssigkeit (A) aus dem zweiten Flüssigkeitsbehälter (20) in den ersten Flüssigkeitsbehälter (10) zurückfließt, angetrieben durch einen Druckunterschied zwischen dem zweiten Flüssigkeitsbehälter (20) und dem ersten Flüssigkeitsbehälter (10) zurück in den ersten Flüssigkeitsbehälter (10) fließt, wenn der zweite Flüssigkeitsbehälter (20) von der Umgebung geschlossen ist, sodass die in den zweiten Flüssigkeitsbehälter (20) einfließende wässrige Flüssigkeit (A) einen Druck im zweiten Flüssigkeitsbehälter (20) aufbaut und wenn der Druck im ersten Flüssigkeitsbehälter (10) durch das Ablassen von Gas an die Umgebung mittels des Druckausgleichsventil (64) reduziert wird.

4. Die Vorrichtung (1) nach Anspruch 3, **dadurch gekennzeichnet, dass** die Vorrichtung (1) eine Rückführleitung (55) umfasst, die den zweiten Flüssigkeitsbehälter (20) mit dem ersten Flüssigkeitsbehälter (10) verbindet, so dass die wässrige Flüssigkeit (A) aus dem zweiten Flüssigkeitsbehälter (20) über die Rückführleitung (55) in den ersten Flüssigkeitsbehälter (10) zurückfließt, wenn der Druck im ersten Flüssigkeitsbehälter (10) durch das Ablassen von Gas an die Umgebung mittels des Druckausgleichsventils (64) reduziert wird, wobei insbesondere die Vorrichtung (1) ein Rückleitungsventil (66) zum Öffnen und/oder Schließen der Rückführleitung (55) umfasst, wobei insbesondere das Rückleitungsventil (66) ein Dreiwegeventil zwischen dem Medium (40), dem zweiten Flüssigkeitsbehälter (20) und der Rückführleitung (55) ist.

5. Die Vorrichtung (1) nach einem der vorstehenden Ansprüche, **dadurch gekennzeichnet, dass** die mindestens eine Fluidleitung (52, 53) so konfiguriert ist, dass sie mit einer entfernbaren Kartusche (2) verbunden werden kann, wobei die Kartusche (2) das Medium (40) enthält.

6. Die Vorrichtung nach Anspruch 5, wobei die Kartusche (2) ferner den zweiten Flüssigkeitsbehälter (20) umfasst.

7. Die Vorrichtung nach Anspruch 5 oder 6, **dadurch gekennzeichnet, dass** die Kartusche (2) ein Identifizierungsmittel (3) umfasst, insbesondere zum Verfolgen der Lebensdauer der Kartusche (2) und/oder zum Identifizieren eines Typs der Kartusche (2), wobei insbesondere das Identifizierungsmittel (3) ein RFID-Chip ist.

8. Die Vorrichtung (1) nach einem der vorstehenden Ansprüche, **dadurch gekennzeichnet, dass** die Vorrichtung den Gasbehälter (30) umfasst, wobei der Gasbehälter (30) CO₂-Gas enthält, so dass die in dem ersten Flüssigkeitsbehälter (10) enthaltene wässrige Flüssigkeit (A) carbonyliert wird, wenn der erste Flüssigkeitsbehälter (10) unter Druck gesetzt wird, wobei insbesondere das Medium (40) mindestens ein Mineralsalz umfasst, dessen Löslichkeit in Gegenwart von CO₂, Kohlensäure, Carbonationen, Hydrogencarbonationen oder einem sauren pH-Wert erhöht ist.

9. Die Vorrichtung (1) nach einem der vorstehenden Ansprüche, **dadurch gekennzeichnet, dass** die Vorrichtung (1) das Medium (40) umfasst, wobei das Medium (40) so konfiguriert ist, dass es mindestens eine Substanz aus der wässrigen Flüssigkeit (A) entfernt, wenn die wässrige Flüssigkeit (A) mit dem Medium (40) in Kontakt gebracht wird, wodurch die wässrige Flüssigkeit (A) gereinigt wird, wobei insbesondere das Medium (40) Aktivkohle, ein lonenaustauschmaterial und/oder einen Filter umfasst.

10. Die Vorrichtung (1) nach einem der vorstehenden Ansprüche, **dadurch gekennzeichnet, dass** die Vorrichtung (1) eine Steuereinrichtung (90) umfasst, wobei die Steuereinrichtung (90) dazu konfiguriert ist, das Druckausgleichsventil (64) und/oder mindestens ein Ventil (61, 62, 63, 66) zu steuern, das dazu konfiguriert ist, eine Gasleitung (51), die den Gasbehälter (30) mit dem ersten Flüssigkeitsbehälter (10) verbindet, mindestens eine Fluidleitung (52, 53) und/oder die Rückführleitung (55) zu öffnen und/oder zu schließen.

11. Ein Verfahren zur Reinigung, Verstärkung und/oder Carbonylierung einer wässrigen Flüssigkeit (A) unter Verwendung der Vorrichtung (1) nach einem der Ansprüche 1 bis 10, wobei
a. Die wässrige Flüssigkeit (A) in dem ersten Flüssigkeitsbehälter (10) bereitgestellt ist
b. der erste Flüssigkeitsbehälter (10) unter Druck gesetzt wird,
c. die wässrige Flüssigkeit (A) aus dem ersten Flüssigkeitsbehälter (10) durch das Medium (40) zur Reinigung und/oder Verstärkung der wässrigen Flüssigkeit (A) in den zweiten Flüssigkeitsbehälter (20) bewegt wird, insbesondere angetrieben durch eine Pumpe (80) oder durch einen Druckunterschied zwischen dem ersten Flüssigkeitsbehälter (10) und dem zweiten Flüssigkeitsbehälter (20),
d. das zweite Fluidventil (63), das so angeordnet und konfiguriert ist, dass es die zweite Fluidleitung (53) schließt und öffnet, geschlossen ist und
e. Gas der wässrigen Flüssigkeit (A) über die weitere Gasleitung (51), die den Gasbehälter (30) direkt mit dem zweiten Flüssigkeitsbehälter (20) verbindet, zugeführt wird, nachdem die wässrige Flüssigkeit (A) aus dem ersten Flüssigkeitsbehälter (10) durch das mindestens eine Medium (40) in den zweiten Flüssigkeitsbehälter (20) gelangt ist.

12. Das Verfahren nach Anspruch 11, wobei
a. mindestens eine Substanz der wässrigen Flüssigkeit (A) durch das Medium (40) zugesetzt wird, insbesondere durch Auflösen der Substanz in der wässrigen Flüssigkeit (A), wenn die wässrige Flüssigkeit (A) mit dem Medium (40) in Kontakt gebracht wird, wodurch die wässrige Flüssigkeit (A) verstärkt wird, wobei insbesondere das Medium (40) mindestens ein Mineralsalz, insbesondere Calciumcarbonat oder Magnesiumcarbonat, und/oder mindestens ein Öl, insbesondere Cannabidiol, umfasst.
und/oder
b. mindestens eine Substanz aus der wässrigen Flüssigkeit (A) durch das Medium (40) entfernt wird, wenn die wässrige Flüssigkeit (A) mit dem Medium (40) in Kontakt gebracht wird, wodurch die wässrige Flüssigkeit (A) gereinigt wird, wobei insbesondere die wässrige Flüssigkeit (A) gefiltert wird oder Bestandteile der wässrigen Flüssigkeit (A) an dem Medium (40) adsorbiert werden.

13. Das Verfahren nach Anspruch 11 oder 12, wobei der erste Flüssigkeitsbehälter (10) durch Einleiten von CO₂-Gas in den ersten Flüssigkeitsbehälter (10) unter Druck gesetzt wird, so dass die in dem ersten Flüssigkeitsbehälter (10) enthaltene wässrige Flüssigkeit (A) carbonyliert wird.

14. Das Verfahren nach Anspruch 13, wobei die Löslichkeit mindestens eines in dem Medium (40) enthaltenen Mineralsalzes durch CO₂, Kohlensäure, Carbonationen und/oder Hydrogencarbonationen in der carbonylierten wässrigen Flüssigkeit und/oder durch einen sauren pH-Wert der carbonylierten wässrigen Flüssigkeit (A) erhöht wird.

15. Das Verfahren nach Anspruch 14, wobei die in den ersten Flüssigkeitsbehälter (10) injizierte CO₂-Menge und/oder die Kontaktzeit mit den Mineralsalzen in dem Medium (40) so gesteuert wird, dass
a. eine noch wässrige Flüssigkeit (A) mit einer CO₂-Gaskonzentration von weniger als 1 g/l, insbesondere weniger als 0,5 g/l, insbesondere weniger als 0,25 g/l, erhalten wird
oder
b. eine carbonylierte wässrige Flüssigkeit (A) mit einer CO₂-Gaskonzentration von 1 g/l oder mehr, insbesondere 2,5 g/l oder mehr, erhalten wird.

## Revendications

1. Dispositif (1) de purification, d'amélioration et/ou de carbonatation d'un liquide aqueux (A) comprenant
- une ligne de gaz (51) pour connecter un réservoir de gaz (30) contenant un gaz pressurisé à un premier réservoir de liquide (10) de sorte que le premier réservoir de liquide (10) peut être pressurisé,
- une autre ligne de gaz (51) configurée pour connecter directement le réservoir de gaz (30) à un second réservoir de liquide (20), dans lequel le second réservoir de liquide (20) est fermé par rapport à l'environnement,
- au moins une ligne de fluide (52, 53) pour connecter le premier réservoir de liquide (10) au second réservoir de liquide (20) par le biais d'au moins un milieu (40) pour purifier et/ou améliorer le liquide aqueux (A), dans lequel le dispositif (1) est configuré pour déplacer le liquide aqueux (A) du premier réservoir de liquide (10) à travers ledit milieu (40) dans le second réservoir de liquide (20),
- une seconde vanne de gaz (61a) agencée et configurée pour ouvrir et/ou fermer l'autre ligne de gaz (51) de sorte que le dispositif est configuré pour l'addition de gaz au liquide aqueux (A) après être passé du premier réservoir de liquide (10) au second réservoir de liquide (20) à travers l'au moins un milieu (40),
dans lequel le dispositif (1) comprend une seconde vanne de fluide (63), dans lequel la seconde vanne de fluide (63) est agencée et configurée pour fermer et ouvrir la seconde ligne de fluide (53) entre une cartouche (2) comprenant le milieu (40) et le second réservoir de liquide (20), pour éviter au liquide aqueux (A) d'être pressé en retour à travers le milieu (40), lorsque le second réservoir de liquide (20) est pressurisé et dans lequel le dispositif (1) comprend ledit milieu (40), dans lequel le milieu (40) est configuré pour ajouter au moins une substance audit liquide aqueux (A), notamment par dissolution de la substance dans ledit liquide aqueux (A), lorsque le liquide aqueux (A) est mis en contact avec ledit milieu (40), améliorant de ce fait ledit liquide aqueux (A), dans lequel notamment ledit milieu (40) comprend au moins un sel minéral, notamment du carbonate de calcium ou carbonate de magnésium, et/ou au moins une huile, notamment du cannabidiol.

2. Dispositif (1) selon la revendication 1, **caractérisé en ce que** le dispositif (1) comprend une pompe (80) configurée pour déplacer le liquide aqueux (A) du premier réservoir de liquide (10) à travers le milieu (40) dans le second réservoir de liquide (20), ou **en ce que** le dispositif (1) est configuré pour déplacer le liquide aqueux (A) du premier réservoir de liquide (10) à travers le milieu (40) dans le second réservoir de liquide (20) entraîné par une différence de pression entre le premier réservoir de liquide (10) et le second réservoir de liquide (20) lorsque le premier réservoir de liquide (10) est pressurisé.

3. Dispositif (1) selon la revendication 1 ou 2, **caractérisé en ce que** le dispositif (1) comprend une vanne d'égalisation de pression (64) connectant le premier réservoir de liquide (10) à l'environnement du dispositif (1) de sorte que le liquide aqueux (A) s'écoule en retour du second réservoir de liquide (20) au premier réservoir de liquide (10) entraîné par une différence de pression entre le second réservoir de liquide (20) et le premier réservoir de liquide (10) lorsque le second réservoir de liquide (20) est fermé par rapport à l'environnement de sorte que le liquide aqueux (A) s'écoulant dans le second réservoir de liquide (20) accroît la pression dans le second réservoir de liquide (20) et lorsque la pression dans le premier réservoir de liquide (10) est réduite en libérant du gaz vers l'environnement au moyen de la vanne d'égalisation de pression (64).

4. Dispositif (1) selon la revendication 3, **caractérisé en ce que** le dispositif (1) comprend une ligne de renvoi (55) connectant le second réservoir de liquide (20) au premier réservoir de liquide (10) de sorte que le liquide aqueux (A) s'écoule en retour du second réservoir de liquide (20) au premier réservoir de liquide (10) par le biais de la ligne de renvoi (55) lorsque la pression dans le premier réservoir de liquide (10) est réduite en libérant du gaz vers l'environnement au moyen de la vanne d'égalisation de pression (64), dans lequel notamment le dispositif (1) comprend une vanne de ligne de renvoi (66) pour ouvrir et/ou fermer la ligne de renvoi (55), dans lequel plus particulièrement ladite vanne de ligne de renvoi (66) est une vanne à trois voies entre le milieu (40), le second réservoir de liquide (20) et la ligne de renvoi (55).

5. Dispositif (1) selon une des revendications précédentes, **caractérisé en ce que** l'au moins une ligne de fluide (52, 53) est configurée pour être connectée à une cartouche amovible (2), dans lequel ladite cartouche (2) contient ledit milieu (40).

6. Dispositif selon la revendication 5, dans lequel ladite cartouche (2) comprend en outre ledit second réservoir de liquide (20).

7. Dispositif selon la revendication 5 ou 6, **caractérisé en ce que** ladite cartouche (2) comprend un moyen d'identification (3), notamment pour tracer la durée de vie de la cartouche (2) et/ou identifier un type de la cartouche (2), dans lequel notamment le moyen d'identification (3) est une puce RFID.

8. Dispositif (1) selon une des revendications précédentes, **caractérisé en ce que** le dispositif comprend ledit réservoir de gaz (30), dans lequel le réservoir de gaz (30) contient du CO₂ gazeux de sorte que le liquide aqueux (A) contenu dans le premier réservoir de liquide (10) est carboné lorsque le premier réservoir de liquide (10) est pressurisé, dans lequel notamment ledit milieu (40) comprend au moins un sel minéral dont la solubilité est augmentée en présence de CO₂, d'acide carbonique, d'ions carbonate, d'ions hydrogénocarbonate ou d'un pH acide.

9. Dispositif (1) selon une des revendications précédentes, **caractérisé en ce que** le dispositif (1) comprend ledit milieu (40), dans lequel le milieu (40) est configuré pour éliminer au moins une substance dudit liquide aqueux (A) lorsque le liquide aqueux (A) est mis en contact avec ledit milieu (40), purifiant de ce fait ledit liquide aqueux (A), dans lequel notamment ledit milieu (40) comprend du charbon actif, un matériau d'échange d'ions et/ou un filtre.

10. Dispositif (1) selon une des revendications précédentes, **caractérisé en ce que** le dispositif (1) comprend un dispositif de commande (90), dans lequel ledit dispositif de commande (90) est configuré pour commander ladite vanne d'égalisation de pression (64) et/ou au moins une vanne (61, 62, 63, 66) configurée pour ouvrir et/ou fermer une ligne de gaz (51) connectant ledit réservoir de gaz (30) audit premier réservoir de liquide (10), à ladite au moins une ligne de fluide (52, 53) et/ou à ladite ligne de renvoi (55).

11. Procédé de purification, d'amélioration et/ou de carbonatation d'un liquide aqueux (A) utilisant le dispositif (1) selon une des revendications 1 à 10, dans lequel
a. ledit liquide aqueux (A) est fourni dans le premier réservoir de liquide (10),
b. le premier réservoir de liquide (10) est pressurisé,
c. le liquide aqueux (A) est déplacé dudit premier réservoir de liquide (10) à travers le milieu (40) pour purifier et/ou améliorer ledit liquide aqueux (A) au second réservoir de liquide (20), notamment entraîné par une pompe (80) ou par une différence de pression entre le premier réservoir de liquide (10) et le second réservoir de liquide (20),
d. la seconde vanne de fluide (63) agencée et configurée pour fermer et ouvrir la seconde ligne de fluide (53) est fermée, et
e. du gaz est ajouté au liquide aqueux (A) par le biais de l'autre ligne de gaz (51) connectant directement le réservoir de gaz (30) au second réservoir de liquide (20) après que le liquide aqueux (A) est passé du premier réservoir de liquide (10) au second réservoir de liquide (20) à travers l'au moins un milieu (40).

12. Procédé selon la revendication 11, dans lequel
a. au moins une substance est ajoutée audit liquide aqueux (A) par ledit milieu (40), notamment par dissolution de la substance dans ledit liquide aqueux (A), lorsque le liquide aqueux (A) est mis en contact avec ledit milieu (40), améliorant de ce fait ledit liquide aqueux (A), dans lequel notamment ledit milieu (40) comprend au moins un sel minéral, notamment du carbonate de calcium ou carbonate de magnésium, et/ou au moins une huile, notamment du cannabidiol
et/ou
b. au moins une substance est éliminée dudit liquide aqueux (A) par ledit milieu (40) lorsque le liquide aqueux (A) est mis en contact avec ledit milieu (40), purifiant de ce fait ledit liquide aqueux (A), dans lequel notamment ledit liquide aqueux (A) est filtré ou des composants dudit liquide aqueux (A) sont adsorbés au milieu (40).

13. Procédé selon la revendication 11 ou 12, dans lequel le premier réservoir de liquide (10) est pressurisé en injectant du CO₂ gazeux dans le premier réservoir de liquide (10) de sorte que le liquide aqueux (A) contenu dans le premier réservoir de liquide (10) est carboné.

14. Procédé selon la revendication 13, dans lequel la solubilité d'au moins un sel minéral compris dans le milieu (40) est augmentée par du CO₂, de l'acide carbonique, des ions carbonate et/ou des ions hydrogénocarbonate dans le liquide aqueux carboné et/ou par un pH acide du liquide aqueux carboné (A).

15. Procédé selon la revendication 14, dans lequel la quantité de CO₂ injecté dans le premier réservoir de liquide (10) et/ou la durée de contact avec lesdits sels minéraux dans ledit milieu (40) est commandée de sorte que
a. un liquide aqueux plat (A) ayant une concentration en CO₂ gazeux de moins de 1 g/l, notamment moins de 0,5 g/l, plus particulièrement moins de 0,25 g/l, est obtenu
ou
b. un liquide aqueux carboné (A) ayant une concentration en CO₂ gazeux de 1 g/l ou plus, notamment de 2,5 g/l ou plus, est obtenu.
